# EUROPÄISCHE PATENTSCHRIFT

(11) **EP 3 161 447 B1**
(45) Veröffentlichungstag und Bekanntmachung des Hinweises auf die Patenterteilung: **26.09.2018**
(21) Anmeldenummer: 15724954.1
(22) Anmeldetag: 08.05.2015
(51) Int. Cl.: G01N 21/84, G01N 21/88, G01M 11/00, G01M 99/00, B60S 1/38, G01B 11/30

(54) **VORRICHTUNG UND VERFAHREN ZUM ÜBERPRÜFEN VON SCHEIBENWISCHERBLÄTTERN**
DEVICE AND METHOD FOR CHECKING WINDSCREEN WIPER BLADES
DISPOSITIF ET PROCÉDÉ DE VÉRIFICATION D'UN BALAI D'ESSUIE-GLACE

(30) Priorität: 27.06.2014 DE 102014212500
(43) Veröffentlichungstag der Anmeldung: 03.05.2017
(73) Patentinhaber: Robert Bosch GmbH, 70442 Stuttgart (DE)
(72) Erfinder: RAMSTEINER, Ingo, 71229 Leonberg (DE)
(86) Internationale Anmeldenummer: PCT/EP2015/060198
(87) Internationale Veröffentlichungsnummer: WO 2015/197253

(56) Entgegenhaltungen:
- GB-A- 2 056 059
- US-A- 5 796 487

## Beschreibung

Die Erfindung betrifft eine Vorrichtung und ein Verfahren zum Überprüfen von Scheibenwischerblättern, insbesondere zum Überprüfen von Scheibenwischerblättern für Kraftfahrzeuge.

### Stand der Technik

Scheibenwischerblätter (Wischerblätter) sind Verschleißteile, im Laufe der Zeit kommt es durch mechanische Beanspruchung zu Unebenheiten auf dem Wischerblatt. Dadurch entstehen beim Wischen Schlieren, die zu beträchtlichen Sichtbehinderungen des Fahrers und damit Gefährdungen im Straßenverkehr führen können.

Der Zustand des Wischerblattes und durch Verschleiß verursachte Sichtbehinderungen bei ungünstigen Witterungs- und Lichtverhältnissen sind in der Werkstatt nur schwer zu demonstrieren. Durch eine Sichtprüfung oder Betasten des Wischerblattes selbst kann dem Kunden ein Austauschbedarf nur schwer vermittelt werden. Auch das Betrachten der Scheibe nach dem Betätigen der Scheibenwaschanlage vermittelt aufgrund des sauberen Wischwassers und der günstigen Lichtverhältnissen bei der Serviceannahme, die in der Regel in einem Gebäudeinnenraum oder zumindest in einem überdachten Bereich stattfindet, keinen richtigen Eindruck, wie schlecht die Sicht beispielsweise bei salzigem Spritzwasser und/oder Sonneneinstrahlung, insbesondere bei Gegenlicht, wäre.

Das Dokument GB 2056059 A zeigt eine Methode bei der während der Bewegung des Wischerblattes und mit Hilfe von Waschfluid die Qualität des Wischerblattes bestimmt wird. Das Dokument US 5,796,487 zeigt ein System und Verfahren um Dunkelfeld-Aufnahme durchzuführen.

Es ist daher einer Aufgabe der Erfindung, eine Vorrichtung und ein Verfahren zur Verfügung zu stellen, die es ermöglichen, den Zustand eines Scheibenwischerblattes schnell und in für den Kunden transparenter Weise zu überprüfen.

### Offenbarung der Erfindung

Die erfindungsgemäße Vorrichtung und das erfindungsgemäße Verfahren sind in Ansprüchen 1 und 10 definiert. Eine Vorrichtung zum Überprüfen eines Wischerblattes, insbesondere eines Kraftfahrzeugs, ist dadurch gekennzeichnet, dass die Vorrichtung einen Körper umfasst, der wenigstens teilweise aus einem transparenten Material, z.B. Glas oder einem Kunststoff, wie z.B. Polymethylmetacrylat oder Polycarbonat, besteht.

Der Körper hat eine Kontaktseite, die zur Kontaktierung mit dem zu überprüfenden Wischerblatt ausgebildet ist; eine Lichteinfallseite, die ausgebildet ist, den Einfall von Licht in den Körper zu ermöglichen; und eine Lichtausfallseite. Der Körper ist so ausgebildet, dass durch die Lichteinfallseite in den Körper eintretendes Licht wenigstens teilweise an der Kontaktfläche reflektiert wird und reflektiertes Licht durch die Lichtausfallseite aus dem Körper austritt.

Ein erfindungsgemäßes Verfahren zum Überprüfen eines Wischerblattes, insbesondere eines Scheibenwischerblattes eines Kraftfahrzeugs, umfasst die Schritte:
Aufbringen des zu überprüfenden Wischerblattes auf eine Kontaktseite eines wenigstens teilweise transparenten Körpers;
Bewirken eines Lichteinfalls in den wenigstens teilweise transparenten Körper;
Betrachten von Licht, dass in den wenigstens teilweise transparenten Körper eingetreten, wenigstens teilweise an der Kontaktfläche reflektiert, und durch eine Lichtausfallseite aus dem Körper ausgetreten ist.

Die Anordnung der genannten Elemente und das Querschnittsprofil des wenigstens teilweise transparenten Körpers sind so ausgestaltet, dass durch die Lichteinfallseite in den Körper eintretendes Licht nach Totalreflexion an der Kontaktseite durch die die Lichtausfallseite des Körpers austritt.

Der Betrachter betrachtet die Vorrichtung von der Lichtausfallseite. Er wird das an der Kontaktseite reflektierte Bild der Lichteinfallseite aufgrund des durch die Lichteinfallseite eintretenden Lichtes als Helligkeit wahrnehmen. An den Stellen, an denen das Material des Wischerblattes in direktem Kontakt mit der Kontaktseite steht, wird die Totalreflexion unterbunden. Diese Bereiche erscheinen dem Betrachter daher dunkel bzw. schwarz.

Bei einem unbeschädigten Wischerblatt sieht der Betrachter beim Betrachten des aus dem Körper austretenden Lichtes daher einen durchgängigen schwarzen Streifen.

Ist das Wischerblatt lokal beschädigt, ist der Kontakt an der betreffenden Stelle gestört, wodurch wieder Totalreflexion auftritt, welche die beschädigte Stelle als helle Unterbrechung der schwarzen Kontaktlinie sichtbar werden lässt. Auf diese Weise können Beschädigungen und Verschleiß des Wischerblattes schnell und deutlich erkannt und dem Kunden sehr anschaulich demonstriert werden.

In einer Ausführungsform weist die Lichteinfallseite eine aufgeraute Fläche auf, die eine diffuse Lichtstreuung des einfallenden Lichtes bewirkt und auf diese Weise eine sehr gleichmäßige Ausleuchtung ermöglicht, bei der Beschädigungen des Wischerblattes besonders deutlich zu erkennen sind. Alternativ oder zusätzlich kann die Lichteinfallseite mit einer matten, lichtstreuenden Farbe beschichtet sein, um eine gleichmäßige Ausleuchtung zu erreichen.

In einer Ausführungsform ist die Lichteinfallseite mit einer fluoreszierenden Farbe beschichtet, die insbesondere bei Beleuchtung mit natürlichem oder künstlichem UV-Licht homogenes Licht in einem gewünschten Wellenbereich erzeugt, der durch die Eigenschaften der fluoreszierenden Farbe vorgegebenen ist.

In einer Ausführungsform weist die Vorrichtung zusätzlich eine künstliche Lichtquelle auf, die ausgebildet ist, Licht auf die Lichteinfallseite zu strahlen, um eine gleichmäßige Ausleuchtung zu erzeugen. So kann die Vorrichtung unabhängig von den Lichtverhältnissen der Umgebung eingesetzt werden. Auf diese Weise kann die Vorrichtung insbesondere auch in dunklen Werkstatträumen eingesetzt werden. Darüber hinaus kann mit Hilfe einer künstlichen Lichtquelle eine besonders homogene Beleuchtung realisiert werden.

Als Lichtquelle können u.a. Glühbirnen, LED, insbesondere LED-Schichten, Gasentladungslampen und/oder TFT-Beleuchtungselemente zum Einsatz kommen.

Die Lichtquelle kann insbesondere als flächige Lichtquelle entlang der Lichteinfallsseite des Körpers ausgebildet sein, um eine optimale, insbesondere homogene, Beleuchtung zu bewirken.

In einer Ausführungsform ist die Lichtausfallseite derart gekrümmt, dass sie eine Sammellinse, insbesondere eine zylindrische Sammellinse, ausbildet, die als Lupe wirkt und dem Betrachter ein vergrößertes Bild der Kontaktstelle zwischen dem Körper und dem Wischerblatt, zur Verfügung stellt. Alternativ kann die Lichtausfallseite mit einer als Sammellinse wirkenden Fresnellinse ausgebildet sein. Durch eine vergrößernde Sammellinse können insbesondere auch kleine Beschädigungen des Wischerblattes sehr gut erkannt werden.

In einer Ausführungsform ist der Körper als Leiste ausgebildet, die eine Länge und eine im Vergleich zur Länge deutliche kleinere Breite und Höhe hat. Die Leiste ist vorzugsweise mindestens so lang wie das längste zu überprüfende Wischerblatt. Auf diese Weise kann das Wischerblatt über seine gesamte Länge in einem einzigen Schritt überprüft werden und es ist nicht erforderlich, das Wischerblatt mehrfach an der Kontaktfläche zu positionieren.

An der Kontaktfläche kann wenigstens eine Führungsschiene ausgebildet sein, die zur Führung des Wischerblattes vorgesehen ist, um den Benutzer bei der korrekten Positionierung des Wischerblattes an der Kontaktfläche zu unterstützten. Insbesondere können zwei parallel zueinander verlaufende Führungsschienen vorgesehen sein, zwischen denen ein Spalt zur Aufnahme des Wischerblattes ausgebildet ist.

Eine derartige Führung des Wischerblattes an der Kontaktfläche ist insbesondere sinnvoll, wenn die Lichtausfallseite, wie zuvor beschrieben, als Linse ausgebildet ist, da die Abbildungseigenschaften der Linse für eine vorgegebene Position des Wischerblattes auf der Kontaktfläche optimiert sind. Darüber hinaus können die Führungsschienen die Kontaktfläche vor Verkratzen schützen.

Die Führungsschienen können entweder am Körper montierte, insbesondere aufgeklebte, Komponenten aus Kunststoff oder Gummi sein. Alternativ können die Führungsschienen Bestandteil des beispielsweise durch Extrudieren hergestellten Körpers sein.

### Figurenbeschreibung

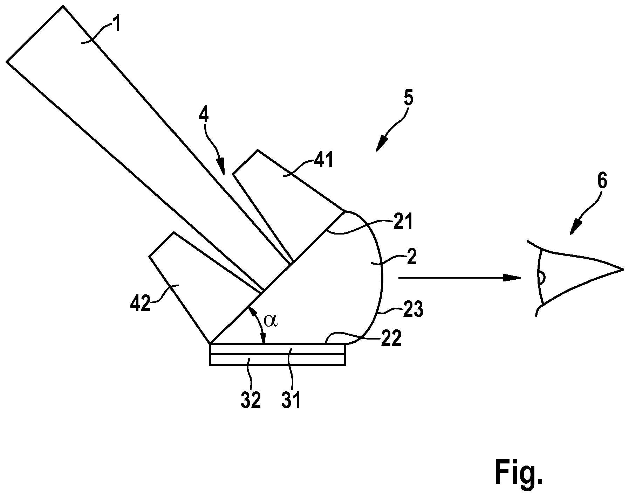

Die Erfindung wird anhand der beigefügten Figur näher erläutert.

Die Figur zeigt einen Querschnitt durch ein Ausführungsbeispiel einer erfindungsgemäßen Vorrichtung 5. Die Vorrichtung 5 hat einen Körper 2, der als Leiste ausgebildet ist, wobei sich die Längsrichtung der Leiste senkrecht zur Zeichenebene der Figur erstreckt. Der Körper 2 ist wenigstens teilweise aus einem optisch transparenten Material, z.B. Glas oder einem transparenten Kunststoff, wie z.B. Polymethylmetacrylat oder Polycarbonat, ausgebildet.

Der Körper 2 weist eine in der Darstellung der Figur in seinem unteren Bereich horizontal verlaufende Lichteinfallseite 22 und eine in einem spitzen Winkel α zur Lichteinfallseite 22 verlaufende Kontaktseite 21 auf, so dass die Lichteinfallseite 22 und die Kontaktseite 21 in der in der Figur gezeigten Querschnittansicht die Schenkel eines Dreiecks bilden. Die Enden der beiden Schenkel sind durch eine Lichtausfallseite 23 miteinander verbunden, die in dem in der Figur gezeigten Ausführungsbeispiel gekrümmt ausgebildet ist, so dass der Körper 2 zwei ebene Seiten 21, 22 und eine gekrümmte Seite 23 aufweist, die der Kante, an der die beiden ebenen Seiten 21, 22 aneinandergrenzen, gegenüberliegt.

An der Lichteinfallseite 22 sind eine fluoreszierende Beschichtung 31 und eine flächig ausgebildete Beleuchtungsvorrichtung 32 vorgesehen, die im Betrieb einen homogenen Lichteinfall durch die Lichteinfallseite 22 bewirken.

Ein zu überprüfendes Wischerblatt 1 ist mit seiner Stirnseite auf die ebene Kontaktseite 21 des Körpers 2 aufgebracht. Zwei Führungsschienen 41, 42, die parallel zur Längserstreckung des Körpers 2 verlaufen, bilden einen Spalt 4 zwischen sich aus, der das Wischerblatt 1 aufnimmt und die korrekte Positionierung des Wischerblattes 1 auf der Kontaktseite unterstützt und erleichtert.

Der Körper 2 ist so ausgestaltet, dass das an der Lichteinfallseite 22 erzeugte Licht nach Totalreflexion an der Kontaktseite 21 durch die Lichtausfallseite 23 des Körpers 2 austritt. Ein Betrachter/Benutzer 6, der die Vorrichtung 5 einsetzt, um das Wischerblatt 1 zu überprüfen, betrachtet die Lichtausfallseite 23 des Körpers 2. Er sieht das an der Kontaktseite 21 reflektierte Bild der Lichteinfallseite 22 als helle Fläche. Da das Material des Wischerblattes 1 einen anderen optischen Brechungsindex als Luft hat, tritt an den Stellen, an denen das Material des Wischerblattes 1 die Kontaktseite 21 berührt, keine Totalreflexion auf. Diese Bereiche erscheinen dem Betrachter 6 daher dunkel bzw. schwarz.

An Stellen, an denen das Wischerblatt 1 beschädigt ist, ist kein Kontakt zwischen dem Wischerblatt 1 und der Kontaktseite 21 vorhanden. An diesen Stellen wird das Licht an der Grenzfläche zwischen der Kontaktseite 21 und der umgebenden Luft (total)reflektiert, und die beschädigten Stellen werden im vom Betrachter 6 wahrgenommenen Bild als helle Unterbrechungen der schwarzen Kontaktlinie sichtbar. Auf diese Weise können Beschädigungen und Verschleiß des Wischerblattes 1 schnell und deutlich erkannt und dem Kunden anschaulich demonstriert werden.

## Patentansprüche

1. Vorrichtung (5) zum Überprüfen eines Wischerblattes (1), insbesondere eines Scheibenwischerblattes eines Kraftfahrzeugs, wobei die Vorrichtung (5) einen wenigstens teilweise transparenten Körper (2) umfasst, wobei der Körper (2) eine Lichteinfallseite (22), eine Kontaktseite (21) und eine Lichtausfallseite (23) aufweist,
**dadurch gekennzeichnet, dass** die Lichteinfallseite (22) und die Kontaktseite (21) im spitzen Winkel zueinander angeordnet sind und die Lichtausfallseite (23) die Enden der Lichteinfallseite (22) und Kontaktseite (21) miteinander verbindet, wobei
die Kontaktseite (21), zur Kontaktierung mit dem zu überprüfenden Wischerblatt (1) ausgebildet ist und
die Lichteinfallseite (22), dazu ausgebildet ist, einen Lichteinfall in den Körper (2) zu ermöglichen;
wobei der wenigstens teilweise transparente Körper (2) so ausgebildet ist, dass durch die Lichteinfallseite (22) in den Körper (2) eintretendes Licht wenigstens teilweise an der Kontaktseite (21) reflektiert wird und reflektiertes Licht durch die Lichtausfallseite (23) aus dem Körper (2) austritt.

2. Vorrichtung (5) nach Anspruch 1, wobei die Lichteinfallseite (22) eine aufgeraute Fläche aufweist.

3. Vorrichtung (5) nach Anspruch 1 oder 2, wobei die Lichteinfallseite (22) mit einer matten, lichtstreuenden und/oder fluoreszierenden Farbe (31) beschichtet ist.

4. Vorrichtung (5) nach einem der vorangehenden Ansprüche, wobei die Vorrichtung (5) zusätzlich wenigstens eine Lichtquelle (32) aufweist, die ausgebildet ist, Licht auf die Lichteinfallseite (22) zu strahlen.

5. Vorrichtung (5) nach Anspruch 4, wobei die Lichtquelle (32) als UV-Lichtquelle ausgebildet ist.

6. Vorrichtung (5) nach Anspruch 4 oder 5, wobei die Lichtquelle (32) als flächige Lichtquelle (32) entlang der Lichteinfallsseite (22) des Körpers (2) ausgebildet ist.

7. Vorrichtung (5) nach einem der vorangehenden Ansprüche, wobei die Lichtausfallseite (23) als vergrößernde Sammellinse, insbesondere als zylindrische Sammellinse oder als Fresnellinse ausgebildet ist.

8. Vorrichtung (5) nach einem der vorangehenden Ansprüche, wobei der Körper (2) als Leiste ausgebildet ist.

9. Vorrichtung (5) nach einem der vorangehenden Ansprüche, wobei an der Kontaktseite (21) wenigstens eine Führungsschiene (41, 42) zur Führung des Wischerblattes (1) ausgebildet ist.

10. Verfahren zum Überprüfen eines Wischerblattes (1), insbesondere eines Scheibenwischerblattes eines Kraftfahrzeugs, unter Verwendung einer Vorrichtung nach einem der Ansprüche 1-9, **dadurch gekennzeichnet, dass** das Verfahren die folgenden Schritte umfasst:
Aufbringen des zu überprüfenden Wischerblattes (1) auf die Kontaktseite (21) eines wenigstens teilweise transparenten Körpers (2);
Bewirken eines Lichteinfalls in den wenigstens teilweise transparenten Körper (2) durch die Lichteinfallseite (22);
Betrachten von Licht, dass in den wenigstens teilweise transparenten Körper (2) eingetreten, wenigstens teilweise an der Kontaktseite (21) reflektiert und durch eine Lichtausfallseite (23) aus dem Körper (2) ausgetreten ist.

## Claims

1. Apparatus (5) for checking a wiper blade (1), in particular a windscreen wiper blade of a motor vehicle, wherein the apparatus (5) comprises an at least partially transparent body (2), wherein the body (2) has a light incidence side (22), a contact side (21) and a light exit side (23),
**characterized in that** the light incidence side (22) and the contact side (21) are arranged at an acute angle with respect to one another, and the light exit side (23) connects the ends of the light incidence side (22) and contact side (21), wherein
the contact side (21) is embodied for making contact with the wiper blade (1) to be checked, and
the light incidence side (22) is embodied for making possible light incidence into the body (2);
wherein the at least partially transparent body (2) is embodied such that light, which enters the body (2) through the light incidence side (22), is reflected at least partially at the contact side (21), and reflected light exits the body (2) through the light exit side (23) .

2. Apparatus (5) according to Claim 1, wherein the light incidence side (22) has a roughened surface.

3. Apparatus (5) according to Claim 1 or 2, wherein the light incidence side (22) is coated with a flat, light-scattering and/or fluorescent paint (31).

4. Apparatus (5) according to one of the preceding claims, wherein the apparatus (5) additionally has at least one light source (32), which is embodied to radiate light onto the light incidence side (22).

5. Apparatus (5) according to Claim 4, wherein the light source (32) is embodied as a UV light source.

6. Apparatus (5) according to Claim 4 or 5, wherein the light source (32) is embodied as a two-dimensional light source (32) along the light incidence side (22) of the body (2).

7. Apparatus (5) according to one of the preceding claims, wherein the light exit side (23) is embodied as a magnifying converging lens, in particular as a cylindrical converging lens or as a Fresnel lens.

8. Apparatus (5) according to one of the preceding claims, wherein the body (2) is in the form of a strip.

9. Apparatus (5) according to one of the preceding claims, wherein at least one guide rail (41, 42) for guiding the wiper blade (1) is formed on the contact side (21) .

10. Method for checking a wiper blade (1), in particular a windscreen wiper blade of a motor vehicle, using an apparatus according to one of Claims 1-9, **characterized in that** the method comprises the following steps:
locating the wiper blade (1) to be checked on the contact side (21) of an at least partially transparent body (2);
causing the incidence of light into the at least partially transparent body (2) through the light incidence side (22);
observing light which has entered the at least partially transparent body (2), has been reflected at least partially at the contact side (21) and has exited the body (2) through a light exit side (23).

## Revendications

1. Dispositif (5), destiné à vérifier un balai d'essuie-glace (1), notamment un balai d'essuie-glace d'un véhicule automobile, le dispositif (5) comprenant un corps (2) au moins partiellement transparent, le corps (2) comportant un côté d'incidence lumineuse (22), un côté de contact (21) et un côté de sortie lumineuse (23),
**caractérisé en ce que** le côté d'incidence lumineuse (22) et le côté de contact (21) sont placés sous un angle aigu l'un par rapport à l'autre et le côté de sortie lumineuse (23) relie l'une à l'autre les extrémités du côté d'incidence lumineuse (22) et du côté de contact (21),
le côté de contact (21) étant conçu pour la mise en contact avec le balai d'essuie-glace (1) qui doit être vérifié et
le côté d'incidence lumineuse (22) étant conçu pour permettre une incidence lumineuse dans le corps (2) ;
le corps (2) au moins partiellement transparent étant conçu de telle sorte que de la lumière pénétrant dans le corps (2) par le côté d'incidence lumineuse (22) soit réfléchie au moins partiellement sur le côté de contact (21) et que la lumière réfléchie sorte du corps (2) par le côté de sortie lumineuse (23).

2. Dispositif (5) selon la revendication 1, le côté d'incidence lumineuse (22) comportant une surface rugosifiée.

3. Dispositif (5) selon la revendication 1 ou 2, le côté d'incidence lumineuse (22) étant revêtu d'une peinture (31) mate, dispersant la lumière et/ou fluorescente.

4. Dispositif (5) selon l'une quelconque des revendications précédentes, le dispositif (5) comportant par ailleurs au moins une source lumineuse (32) qui est conçue pour émettre de la lumière sur le côté d'incidence lumineuse (22).

5. Dispositif (5) selon la revendication 4, la source lumineuse (32) étant conçue sous la forme de source lumineuse UV.

6. Dispositif (5) selon la revendication 4 ou 5, la source lumineuse (32) étant conçue sous la forme de source lumineuse (32) plane, le long du côté d'incidence lumineuse (22) du corps (2).

7. Dispositif (5) selon l'une quelconque des revendications précédentes, le côté de sortie lumineuse (23) étant conçu sous la forme de lentille convergente agrandissante, notamment sous la forme de lentille convergente cylindrique ou sous la forme de lentille de Fresnel.

8. Dispositif (5) selon l'une quelconque des revendications précédentes, le corps (2) étant conçu sous la forme de baguette.

9. Dispositif (5) selon l'une quelconque des revendications précédentes, sur le côté de contact (21) étant conçu au moins un rail de guidage (41, 42), destiné à guider le balai d'essuie-glace (1).

10. Procédé, destiné à vérifier un balai d'essuie-glace (1), notamment un balai d'essuie-glace d'un véhicule automobile en utilisant un dispositif selon l'une quelconque des revendications 1 à 9, **caractérisé en ce que** le procédé comprend les étapes suivantes :
appliquer le balai d'essuie-glace (1) qui doit être vérifié sur le côté de contact (21) d'un corps (2) au moins partiellement transparent ;
provoquer une incidence lumineuse dans le corps (2) au moins partiellement transparent, à travers le côté d'incidence lumineuse (22) ;
observer la lumière qui a pénétré dans le corps (2) au moins partiellement transparent, qui a été réfléchie sur le côté de contact (21) et qui est sortie du corps (2) par le côté de sortie lumineuse (23).
